(19) Europäisches Patentamt / European Patent Office / Office européen des brevets

(11) **EP 1 789 764 B1**

(12) **EUROPÄISCHE PATENTSCHRIFT**

(45) Veröffentlichungstag und Bekanntmachung des Hinweises auf die Patenterteilung:
**01.10.2008  Patentblatt 2008/40**

(21) Anmeldenummer: **05783102.6**

(22) Anmeldetag: **25.08.2005**

(51) Int Cl.:
**G01J 5/06** (2006.01)

(86) Internationale Anmeldenummer:
**PCT/EP2005/009166**

(87) Internationale Veröffentlichungsnummer:
**WO 2006/029694 (23.03.2006 Gazette 2006/12)**

(54) **STRAHLUNGSMESSGERÄT SOWIE VERFAHREN UND EINRICHTUNG ZUR ÜBERPRÜFUNG DER ORDNUNGSGEMÄSSEN FUNKTIONSWEISE DES STRAHLUNGSMESSGERÄTES**

RADIATION MEASURING APPARATUS, AND METHOD AND DEVICE FOR TESTING PROPER FUNCTIONING OF SAID RADIATION MEASURING APPARATUS

APPAREIL DE MESURE DE RAYONNEMENT, ET PROCEDE ET DISPOSITIF POUR VERIFIER LE BON FONCTIONNEMENT DE CET APPAREIL DE MESURE DE RAYONNEMENT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **18.09.2004   DE 102004045444**
**16.10.2004   DE 102004050451**

(43) Veröffentlichungstag der Anmeldung:
**30.05.2007   Patentblatt 2007/22**

(73) Patentinhaber: **KAZ Europe SA**
**1003 Lausanne (CH)**

(72) Erfinder: **KRAUS, Bernhard**
**35619 Braunfels (DE)**

(74) Vertreter: **Grünecker, Kinkeldey, Stockmair & Schwanhäusser Anwaltssozietät Leopoldstrasse 4 80802 München (DE)**

(56) Entgegenhaltungen:
**DE-A1- 19 757 448          US-A1- 2003 060 717**
**US-A1- 2004 086 022**

**Beschreibung**

Die vorliegende Erfindung betrifft ein Strahlungsmeßgerät mit einem beheizbaren oder kühlbaren optischen Element im Strahlengang, beispielsweise ein Infrarot-Fieberthermometer mit einem beheizbaren und/oder kühlbaren Strahlungseintrittsfenster, sowie ein Verfahren und eine Einrichtung zur Überprüfung der ordnungsgemäßen Funktionsweise eines derartigen Strahlungsmeßgeräts.

Die ordnungsgemäße Funktionsweise von Infrarot-Strahlungsthermometern muß bei einer professionellen Nutzung, wie beispielsweise beim Einsatz von Infrarot-Fieberthermometern in Krankenhäusern, von Zeit zu Zeit überprüft werden, um unerwünschte Verschmutzungen oder eventuelle Kalibrierungsfehler rechtzeitig zu erkennen und daraus resultierende Messfehler zu vermeiden. In Krankenhäusern wird hierfür üblicherweise ein schwarzer Strahler mit bekannter Temperatur als Strahlungsnormal installiert. Dieser Strahler ist jedoch relativ teuer und auch zumindest insofern umständlich zu bedienen, als die Infrarot-Fieberthermometer für die regelmäßig erforderliche Funktionsüberprüfung immer von der jeweiligen Station zum Strahlungsnormal hin- und wieder zurücktransportiert werden müssen.

Aus der WO 00/54012 ist ein Infrarot-Sensor bekannt, der ein Sensorgehäuse mit einem infrarotdurchlässigen Strahlungseintrittsfenster, ein in dem Sensorgehäuse angeordnetes Sensorelement zur Umwandlung einfallender Infrarot-Strahlung in elektrische Meßsignale und eine zugeordnete Messelektronik zur Erfassung und Auswertung der Meßsignale aufweist. In dem Sensorgehäuse ist außerhalb des Strahlengangs zudem ein aktivierbarer Infrarot-Strahler so angeordnet, daß zumindest ein Teil der von ihm abgestrahlten Energie das Strahlungseintrittsfenster passiert und dort eventuell vorhandene Verunreinigungen entsprechend erwärmt. Diese Erwärmung wird durch das Sensorelement erfasst und in ein Kalibrierungssignal umgewandelt, das als Maß für eine Verschmutzung des Fensters dient und zur automatischen Kompensation des Verschmutzungseinflusses bei einer nachfolgenden Temperaturmessung genutzt wird.

Die Aufgabe der vorliegenden Erfindung besteht in der Schaffung eines möglichst einfachen Strahlungsmeßgeräts, dessen ordnungsgemäße Funktionsweise schnell überprüft werden kann, und in der Angabe eines effektiven und zuverlässigen Verfahrens zur Überprüfung des Strahlungsmeßgeräts hinsichtlich eventueller Verschmutzungen oder Kalibrierungsfehler, die zu Meßfehlern führen können. Das gesuchte Verfahren soll dem Benutzer ferner bei einer erkannten Funktionsstörung eine Möglichkeit für deren Behebung bieten.

Diese Aufgabe wird erfindungsgemäß durch ein Verfahren gemäß Anspruch 1 gelöst. Bevorzugte Verfahrensvarianten sind den zugehörenden Unteransprüchen zu entnehmen.

Ein bekanntes Strahlungsthermometer weist einen Infrarot-Strahlungssensor und ein beheizbares und/oder kühlbares Strahlungseintrittsfenster auf. Beim erfindungsgemäßen Verfahren bzw. Strahlungsthermometer wird die bekannte Abhängigkeit des Sensorsignals U des Infrarot-Strahlungssensors von der Temperatur $T_W$ des Strahlungseintrittsfensters W (oder auch eines sonstigen heizbaren oder kühlbaren optischen Elements im Strahlengang) zur Überprüfung seiner ordnungsgemäßen Funktionsweise genutzt. Im Falle eines idealen Messobjekts mit der Emissivität 1 und der Temperatur $T_b$ und eines Strahlungseintrittsfensters mit der Emissivität $\varepsilon$ und der Transmission t ergibt sich für das Sensorsignal U mit dem Plank'schen Strahlungsintegral L(T) unter der Annahme, daß die Sensortemperatur gleich der Umgebungstemperatur $T_a$ sei:

$$U = S' \cdot \left[ t \cdot \left( L(T_b) - L(T_a) \right) + \varepsilon \cdot \left( L(T_W) - L(T_a) \right) \right] \qquad (1)$$

bzw.

$$U = S \cdot \left[ \left( L(T_b) - L(T_a) \right) + \frac{\varepsilon}{t} \cdot \left( L(T_W) - L(T_a) \right) \right] \qquad (2)$$

Die Empfindlichkeit S des Strahlungssensors sowie die Emissivität $\varepsilon$ und die Transmission t des Strahlungseintrittsfensters W werden als gerätespezifische Parameter bei der Kalibrierung des Strahlungsthermometers bestimmt und als Kalibrierungsdaten in dessen Meßelektronik gespeichert. Eine eventuelle Veränderung eines oder mehrerer dieser Parameter, beispielsweise infolge einer Verschmutzung, eines Alterungsprozesses oder eines Defektes eines Sensorelementes im Strahlengang, bewirkt eine entsprechende Veränderung oder Verfälschung des Sensorsignals U und führt damit zu entsprechend ungenauen Messergebnissen.

Bei ungeheiztem oder ungekühltem Strahlungseintrittsfenster W ist die Fenstertemperatur $T_W$ gleich der Um-

gebungstemperatur $T_a$, sodaß das Strahlungseintrittsfenster W keinen Einfluß auf das Sensorsignal U hat. In diesem Fall hängt das Sensorsignal nur noch von der Empfindlichkeit S des Strahlungssensors, von der Temperatur $T_b$ des gewählten Meßobjekts und von der Umgebungstemperatur $T_a$ ab:

$$U_0 = S \cdot \left[ L(T_b) - L(T_a) \right] \qquad (3)$$

Wird das Strahlungseintrittsfenster W (oder auch ein sonstiges optisches Element im Strahlengang) hingegen geheizt oder gekühlt, so erhöht bzw. erniedrigt sich das Sensorsignal U ausgehend von dem fensterunabhängigen Wert $U_0$ in Abhängigkeit von den drei gerätespezifischen Parametern S, $\varepsilon$ und t als Funktion der Fenstertemperatur $T_W$ und der Umgebungstemperatur $T_a$ um den Betrag:

$$\Delta U_W = \left| S \cdot \frac{\varepsilon}{t} \cdot \left[ L(T_W) - L(T_a) \right] \right| \qquad (4)$$

$\Delta U_W$ steigt somit ausgehend vom Wert Null für $T_W = T_a$ mit zunehmender Erwärmung bzw. Abkühlung des Strahlungseintrittsfensters W an, wobei die funktionelle Abhängigkeit durch das Plank'sche Strahlungsintegral $L(T_W)$ mit der Proportionalitätskonstanten $S \cdot \varepsilon / t$ bestimmt ist.

Beim erfindungsgemäßen Verfahren wird das Strahlungseintrittsfenster (oder gegebenenfalls auch ein sonstiges optisches Element im Strahlengang) durch Aktivierung einer zugeordneten elektrischen Heiz- oder Kühleinrichtung aufgeheizt oder abgekühlt. Die sich hierbei ergebende Veränderung $\Delta U_W$ des Sensorsignals U wird in Abhängigkeit von der Fenstertemperatur $T_W$ vorzugsweise kontinuierlich erfasst und im Hinblick auf eine eventuelle Abweichung von einem durch die Kalibrierungsdaten bestimmten und bei der Kalibrierung des Strahlungsmeßgeräts ermittelten, vorgegebenen Zulässigkeitswert oder Zulässigkeitsbereich mit bestimmten zulässigen Toleranz- oder Fehlergrenzen analysiert oder überprüft, bei dem eine ordnungsgemäße Funktionsweise des Strahlungsmeßgeräts gewährleistet ist. Im Falle einer unzulässig starken Abweichung wird dem Benutzer eine Funktionsstörung signalisiert.

Mit dem Strahlungsmeßgerät wird somit beispielsweise bei zumindest zwei beliebigen unterschiedlichen Temperaturen $T_{W1}$ und $T_{W2}$ des Strahlungseintrittsfensters W jeweils ein die Temperatur $T_b$ eines beliebigen Messobjektes repräsentierendes Meßsignal $U_1$ bzw. $U_2$ aufgenommen. Die Messungen erfolgen hierbei in einem geringen zeitlich Abstand, so daß mit hinreichender Genauigkeit von einer konstanten Objekttemperatur $T_b$ und einer konstanten Umgebungstemperatur $T_a$ während des Messvorganges ausgegangen werden kann. Für den Differenzbetrag $\Delta U$ der beiden Meßsignale $U_1$ und $U_2$ ergibt sich somit aus Gleichung (2):

$$\Delta U = \left| U_2 - U_1 \right| = \left| S \cdot \frac{\varepsilon}{t} \cdot \left( L(T_{W2}) - L(T_{W1}) \right) \right| \qquad (5)$$

Im ungeheizten oder ungekühlten Fall ist die Fenstertemperatur $T_W$ konstant, so daß das Differenzsignal $\Delta U$ wegen $T_{W1} = T_{W2} = T_W$ gleich Null ist und das Strahlungseintrittsfenster - wie oben bereits erwähnt wurde - wegen $T_W = T_a$ keinen Einfluß auf das Sensorsignal U hat (d.h. $\Delta U = \Delta U_W = 0$).

Die Signaldifferenz $\Delta U$ bei unterschiedlichen Fenstertemperaturen $T_{W1}$ und $T_{W2}$, oder allgemein die Veränderung $\Delta U_W$ des Sensorsignals U als Funktion der Fenstertemperatur $T_W$ (oder die Steigung der entsprechenden Sensorsignalkurve), ist lediglich eine Funktion dieser beiden Fenstertemperaturen $T_{W1}$ und $T_{W2}$ (oder allgemein der Fenstertemperatur $T_W$) - wobei einer dieser beiden Temperaturen gegebenenfalls auch gleich der Umgebungstemperatur $T_a$ gewählt werden kann - und der drei gerätespezifischen Parameter S, $\varepsilon$ und t. Sie ist jedoch unabhängig von der unbekannten Temperatur $T_b$ des jeweiligen Messobjekts und - falls nicht eine der beiden Messungen bereits bei ungeheiztem oder ungekühlten Strahlungseintrittsfenster durchgeführt wird - auch unabhängig von der unbekannten Umgebungstemperatur $T_a$, so daß die Kenntnis dieser beiden externen Temperaturgrößen und der entsprechenden Plank'schen Strahlungsintegrale $L(T_b)$ und $L(T_a)$ zur Auswertung von Gleichung (5) nicht unbedingt erforderlich ist.

Die angegebene Signaldifferenz $\Delta U$ ist damit eine Größe, die als Funktion der Fenstertemperaturen $T_{W1}$ und $T_{W2}$ bei der Kalibrierung des Strahlungsmeßgeräts bestimmt und zusammen mit den anderen Kalibrierungsdaten S, $\varepsilon$ und t (und gegebenenfalls auch $L(T_W)$ für unterschiedliche $T_W$) in dessen Messelektronik gespeichert werden kann.

Die gemessene Signaldifferenz $\Delta U = |U_2 - U_1|$ der beiden Meßsignale $U_1, U_2$ wird nun bei dem vorliegenden erfindungsgemäßen Verfahren mit einem bei der Kalibrierung bestimmten vorgegebenen Zulässigkeitswert oder auch einem Zulässigkeitsbereich mit bestimmten zulässigen Toleranz- oder Fehlergrenzen verglichen, bei dem eine ordnungsgemäße Funktionsweise des Strahlungsmeßgeräts gewährleistet ist. Im Falle einer eventuellen Abweichung der gemessen Signaldifferenz $\Delta U$ von dem vorgegebenen Zulässigkeitswert oder Zulässigkeitsbereich wird dem Benutzer automatisch eine Funktionsstörung signalisiert. Vorzugsweise wird hierbei anhand der gemessen Signaldifferenz $\Delta U$ auch gleich die Art der vorliegenden Funktionsstörung ermittelt und dem Benutzer angezeigt. Gegebenenfalls wird ihm hierbei auch gleich ein Hinweis oder eine Möglichkeit zu deren Behebung gegeben. Anhand der gemessen Signaldifferenz $\Delta U$ kann ein erkannter Kalibrierungsfehler gemäß den folgenden Ausführungen jedoch gegebenenfalls auch automatisch korrigiert werden. Gegebenenfalls kann somit auch eine automatische Kompensation des erkannten Kalibrierungsfehlers und eine automatische Korrektur der Messwerte bei einer nachfolgenden Nutzung des Strahlungsmeßgeräts, wie beispielsweise zur Temperaturmessung im Ohr eines Benutzers erfolgen.

Bei einer eventuellen Verschmutzung des Strahlungseintrittsfensters W nimmt dessen Transmission t entsprechend ab und die Emissivität $\varepsilon$ zu, so daß die gemessene Signaldifferenz $\Delta U$ bei zwei gewählten Fenstertemperaturen $T_{W1}$ und $T_{W2}$ gemäß Gleichung (5) größer ist als bei einem nicht verschmutzten Strahlungseintrittsfenster. Das Sensorsignal U steigt dann beim Aufheizen des verschmutzten Strahlungseintrittsfensters W entsprechend stärker an bzw. es zeigt sich beim Abkühlen ein schnellerer Abfall als bei einem sauberen Strahlungseintrittsfenster W.

Falls die gemessene Differenz $\Delta U = |U_2 - U_1|$ der beiden Meßsignale $U_1, U_2$ betragsmäßig oberhalb des vorgegebenen Zulässigkeitswerts oder Zulässigkeitsbereichs liegt, wird dem Benutzer daher eine unzulässig starke Verschmutzung des Strahlungseintrittsfensters W signalisiert und eine Reinigung des Strahlungseintrittsfensters W empfohlen. Zur Behebung der erkannten Funktionsstörung wird daher zunächst in einem weiteren Verfahrensschritt das Strahlungseintrittsfenster W überprüft und gegebenenfalls gereinigt. Vor einer Benutzung des Strahlungsmeßgeräts erfolgt dann anschließend vorzugsweise sicherheitshalber auf die oben beschriebene Art und Weise noch eine erneute Überprüfung seiner ordnungsgemäßen Funktionsweise oder seiner Funktionsfähigkeit.

Hat sich hingegen beispielsweise infolge einer Verschmutzung, eines Alterungsprozesses oder eines Defektes eines Sensorelementes im Strahlengang die Empfindlichkeit S des Strahlungssensors verringert, so ergibt sich gemäß Gleichung (5) eine entsprechend geringere Signaldifferenz $\Delta U$ als im ursprünglichen ungestörten Kalibrierungszustand. Das Sensorsignal U steigt dann beim Aufheizen des Strahlungseintrittsfensters W entsprechend geringer an bzw. es zeigt sich beim Abkühlen ein langsamerer Abfall als bei einem ordnungsgemäßen Strahlungssensor.

Falls die gemessene Differenz $\Delta U = |U_2 - U_1|$ der beiden Meßsignale $U_1$ und $U_2$ daher betragsmäßig unterhalb des vorgegebenen Zulässigkeitswerts oder Zulässigkeitsbereichs liegt, wird dem Benutzer ein möglicher Kalibrierungsfehler infolge einer Veränderung der Sensorempfindlichkeit S signalisiert.

In diesem Fall wird das Strahlungseintrittsfenster W vorzugsweise zunächst ebenfalls überprüft und gegebenenfalls gereinigt, um eventuelle Verschmutzungseinflüsse zuverlässig ausschließen und mit hinreichender Genauigkeit von konstanten Werten für $\varepsilon$ und t entsprechend den in der Messelektronik gespeicherten ursprünglichen Kalibrierungsdaten ausgehen zu können.

Anschließend erfolgt dann auf die oben beschriebene Art und Weise eine erneute Überprüfung der ordnungsgemäßen Funktionsweise oder der Funktionsfähigkeit des Strahlungsmeßgeräts mit einer neuerlichen Bestimmung der Meßsignaldifferenz $\Delta U$ und ihrer Abweichung von dem vorgegebenen Zulässigkeitswert oder Zulässigkeitsbereich (bzw. die Abweichung der Steigung $S \cdot \varepsilon / t$ des sich für das Sensorsignal als Funktion der Fenstertemperatur $T_W$ ergebenden Kurvenverlaufs). Da diese Abweichung gemäß Gleichung (5) nunmehr ausschließlich auf eine Veränderung der Empfindlichkeit S des Strahlungssensors zurückzuführen ist, kann sie zur automatischen Kompensation des vorliegenden Kalibrierungsfehlers bei einer nachfolgenden Nutzung des Strahlungsmeßgeräts, beispielsweise zur Temperaturmessung im Falle eines Infrarot-Strahlungsthermometers, und zur automatischen Korrektur der Sensorsignale oder Messwerte genutzt werden. indem sie zur automatischen Erzeugung eines entsprechenden Kalibrierungs-Korrektursignals bzw. Sensorsignal- oder Messwert-Korrektursignals herangezogen wird. Das Strahlungsmeßgerät könnte sich damit vor jeder Messung automatisch selbst kalibrieren, um so beispielsweise den Einfluß einer Verschmutzung, eines Alterungsprozesses oder eines Defektes eines Sensorelementes im Strahlengang auf die Messergebnisse automatisch zu eliminieren.

Gegebenenfalls kann dem Benutzer auch zur Durchführung einer exakten Neu- oder Nachkalibrierung des Strahlungsmeßgeräts geraten werden.

Zur Vermeidung von Messfehlern wird die beschriebene erfindungsgemäße Funktionsüberprüfung des Strahlungsmeßgeräts vorzugsweise bei jeder Messung durchgeführt.

Sie erfolgt insbesondere kontinuierlich, wobei das Sensorsignal U beim Aufheizen- oder Abkühlen des Strahlungseintrittsfensters W kontinuierlich gemessen und die Steigung der sich ergebenden Anstiegs- oder Abfallkurve des Sensorsignals als Funktion der Fenstertemperatur $T_W$ bestimmt wird. Die Steigung kann hierbei - entsprechend den obigen Ausführungen - beispielsweise einfach anhand der Differenz zweier Meßsignale bestimmt werden; bei höheren Genauigkeitsanforderungen können jedoch gegebenenfalls auch entsprechend genauere numerische Verfahren genutzt werden, bei denen eine größere Anzahl an Messwerten ausgewertet wird. Diese Steigung, die gemäß Gleichung (4) gleich dem aktuellen Wert für S•ε/t ist, wird dann entsprechend den obigen Ausführungen mit dem bei der Kalibrierung bestimmten ursprünglichen Steigungswert verglichen.

Die erfindungsgemäße Funktionsüberprüfung des Strahlungsmeßgeräts kann jedoch gegebenenfalls auch quasikontinuierlich in bestimmten Temperatur- bzw. Zeitabständen erfolgen.

Die kontinuierliche oder quasikontinuierliche Funktionsüberprüfung des Strahlungsmeßgeräts erfolgt vorzugsweise auch während einer Nutzung des Strahlungsmeßgeräts, wie beispielsweise bei einer Temperaturmessung im Falle eines Infrarot-Strahlungsthermometers. Die Temperatur $T_W$ des Strahlungseintrittsfensters (oder gegebenenfalls auch eines sonstigen optischen Elements im Strahlengang) wird hierbei vorzugsweise zeitlich periodisch variiert, z.B. sinusförmig, so daß sich auch eine entsprechende zeitlich periodische Veränderung des gemessenen Sensorsignals U ergibt.

Um Meßsignaländerungen durch eine eventuelle Temperaturänderung eines erfassten Messobjekts zu vermeiden, kann die erfindungsgemäße Funktionsüberprüfung auch bei abgedecktem Strahlungseintrittsfenster erfolgen, so daß nur noch die Wärmestrahlung des Strahlungseintrittsfensters W erfaßt und entsprechend den obigen Ausführungen erfindungsgemäß ausgewertet wird.

Durch die erfindungsgemäße Verwendung eines geheizten oder gekühlten optischen Elements im Strahlengang, wie z.B. insbesondere ein entsprechend ausgebildetes Strahlungseintrittsfenster, lässt sich somit die ordnungsgemäße Funktionsweise von Strahlungsmeßgeräten jederzeit auf sehr einfache und schnelle Art und Weise sehr genau und sehr zuverlässig überprüfen, Das erfindungsgemäße Verfahren ermöglicht es, die Art einer eventuellen Funktionsstörung, wie z.B. eine vorliegende Verschmutzung oder ein Kalibrierungsfehler infolge eines Alterungsprozesses oder eines Defekts, zuverlässig zu erkennen und die erkannte Funktionsstörung gegebenenfalls auch durch Erzeugung eines entsprechenden Funktionsstörungs-, Fehler-, Korrektur- oder Kalibrierungssignals automatisch zu beheben. Das beschriebene Verfahren gestattet auch eine kontinuierliche Funktionsüberwachung eines Strahlungsmeßgeräts bei seiner Benutzung, ohne daß dies mit einer spürbaren Beeinträchtigung seiner Handhabung oder der erreichbaren Messgenauigkeit, beispielsweise bei der Durchführung einer Temperaturmessung, verbunden wäre.

Zur erfindungsgemäßen Funktionsüberprüfung eines Strahlungsmeßgeräts werden im Unterschied zum bekannten Stand der Technik keine zusätzlichen externen Komponenten, wie z.B. ein Schwarzer Strahler mit bekannter Temperatur als Strahlungsnormal, benötigt, so daß keinerlei Zusatzkenntnisse über deren ordnungsgemäße Nutzung erforderlich sind und auch keine zusätzlichen Kosten für deren Anschaffung und Instandhaltung anfallen. Zur Durchführung des erfindungsgemäßen Verfahrens ist stattdessen lediglich ein entsprechend ausgebildetes Strahlungsmeßgerät an sich erforderlich, den man durch eine einfache und kostengünstige, im wesentlichen softwaremäßige, erfindungsgemäße Umgestaltung oder Umrüstung eines herkömmlichen Strahlungsmeßgeräts, wie beispielsweise insbesondere ein IR-Strahlungsthermometer mit beheizbarer Meßspitze erhält.

Das beschriebene Verfahren ist daher insbesondere zur automatischen Funktionsüberprüfung von IR-Strahlungsthermometern geeignet, bei denen es sowohl bei einer privaten als auch bei einer industriellen Nutzung nicht nur eine sehr einfache und schnelle Detektion von verschmutzten Einweg-Schutzkappen ermöglicht, sondern gegebenenfalls auch eine zuverlässige Erfassung und automatische Behebung von Kalibrierungsfehlern gewährleistet.

Ein Strahlungsmeßgerät zur Durchführung dieses erfindungsgemäßen Verfahrens umfasst ein Sensorgehäuse mit einem strahlungsdurchlässigen Strahlungseintrittsfenster und einer zugeordneten Heiz- oder Kühleinrichtung, die vorzugsweise periodisch aktivierbar ist. In dem Sensorgehäuse ist zumindest ein Infrarot-Sensorelement zur Umwandlung einfallender Wärmestrahlung in elektrische Sensorsignale angeordnet, das mit einer zugeordneten Meßelektronik zur Erfassung und Auswertung dieser Meßsignale verbunden ist. Die Meßelektronik ist wiederum mit einer geeigneten Anzeigeeinrichtung, wie beispielsweise ein Display, zum Anzeigen ausgewerteter Meßsignale in einer geeigneten Form verbunden. Die Anzeigeeinrichtung kann gegebenenfalls auch eine geeignete Aufnahme- oder Speichereinrichtung zum Aufnehmen oder Speichern der Meß- oder.Sensorsignale umfassen.

Die Meßelektronik umfasst einen Datenspeicher für Kalibrierungsdaten, wie insbesondere die Empfindlichkeit S des Strahlungssensors sowie die Emissivität ε und die Transmission t seines Strahlungseintrittsfensters W. Die Kalibrierungsdaten können auch die zugeordneten Signaldifferenzen ∆U als Funktion bestimmter vorgegebener Fenstertemperaturen $T_W$ umfassen, oder aber - alternativ hierzu - Werte für die entsprechenden Plank'schen Strahlungsintegrale $L(T_w)$.

Die Messelektronik umfasst darüber hinaus erfindungsgemäß auch noch eine Analyseeinrichtung zur Analyse oder Auswertung eines sich zeitlich verändernden Mess- oder Sensorsignals U bzw. von Mess- oder Sensorsignal-Differerizen ∆U und zur Erzeugung eines entsprechenden Funktionsstörungssignals, das zur Charakterisierung einer erfassten Funktionsstörung dient und über die Anzeigeeinrichtung anzeigbar ist oder angezeigt wird. Das Funktionsstörungs- oder Analysesignal kann jedoch beispielsweise auch ein Kalibrierungs-, Kompensations- oder Korrektursignal für eine Neukalibrierung des Strahlungsmeßgeräts oder eine automatische Korrektur von Meßsignalen oder Messwerten umfassen.

Das Strahlungseintrittsfenster W umfasst vorzugsweise zumindest einen Temperaturfühler oder Temperatursensor zur direkten Erfassung der Fenstertemperatur $T_W$ sowie eine integrierte Heiz- oder Kühleinrichtung. Als Strahlungseintrittsfenster W kann beispielsweise eine mit einer elektrischen Heizeinrichtung versehene, hinreichend dünne Siliziumscheibe verwendet werden. Der Stromfluß kann hierbei durch eine entsprechende Strukturierung der Siliziumscheibe optimiert werden. Gleichzeitig ist es auch möglich, auf an sich bekannte Art und Weise einen oder mehrere Temperatursensoren zu integrieren. Eine solche Siliziumscheibe besitzt auch eine geringe thermische Zeitkonstante, die eine schnelle Veränderung oder Anpassung der Fenstertemperatur bei einer zeitlich veränderlichen Aktivierung der Heiz- oder Kühleinrichtung ermöglicht.

Vorzugsweise kann auch noch eine Steuerungseinrichtung zur Steuerung von Aufnahme- oder Messvorgängen und zur Steuerung erfindungsgemäßer Funktionsüberprüfungen vorgesehen sein.

Im Falle eines Infrarot-Ohrthermometers mit einer beheizbaren Meßspitze sind keine zusätzlichen Bauteile oder Komponenten zur Durchführung des erfindungsgemäßen Verfahrens erforderlich. Es genügt eine softwaremäßige Umrüstung der Meßelektronik im Sinne der oben beschriebenen Analyseeinrichtung. Hiermit lassen sich ohne zusätzlichen konstruktiven Aufwand eventuelle Funktionsstörungen zuverlässig erkennen, so daß stets eine gleichbleibend hohe Meßgenauigkeit gewährleistet ist. Soll das Ohrthermometer mit einer auf die Meßspitze aufzusetzenden Einweg-Schutzkappe benutzt werden, müssen die Kalibrierungsdaten nicht nur die optischen Eigenschaften des Strahlungseintrittsfensters des Ohrthermometers berücksichtigen sondern auch die Emissivität und die Transmission der auf die Meßspitze aufgesetzten Einweg-Schutzkappe. Allerdings muß immer dann eine Neukalibrierung vorgenommen werden, wenn das Ohrthermometer zuvor ohne aufgesetzte Einweg-Schutzkappe betrieben wurde und jetzt mit aufgesetzter Einweg-Schutzkappe betrieben werden soll und umgekehrt. Diese Neukalibrierung kann mit dem erfindungsgemäßen Verfahren automatisch erfolgen. Statt einer automatischen Funktionsüberprüfung, die jedesmal beispielsweise beim Einschalten des Strahlungsthermometers aktiviert wird, kann aber auch ein zusätzlicher Schalter vorgesehen sein, mit dem die Funktionsüberprüfung lediglich bei Bedarf manuell ausgelöst werden kann. Entsprechendes gilt, wenn das Ohrthermometer mit unterschiedlichen Einweg-Schutzkappen betrieben werden soll, die sich beispielsweise in ihrer Farbe, Form und/oder Material unterscheiden.

Weitere Merkmale und Vorteile der vorliegenden Erfindung ergeben sich nicht nur aus den zugehörenden Ansprüchen - für sich und/oder in Kombination - sondern auch aus der nachfolgenden Beschreibung eines bevorzugten Ausführungsbeispiels in Verbindung mit den zugehörenden Figuren. Die Figuren zeigen in schematischer Darstellung:

Fig. 1    eine beheizbare Meßspitze eines IR-Strahlungsthermometers;

Fig. 2    beispielhafte Temperaturverläufe bei einer kontinuierlichen Funktionsüberprüfung des Strahlungsthermometers gemäß Fig. 1.

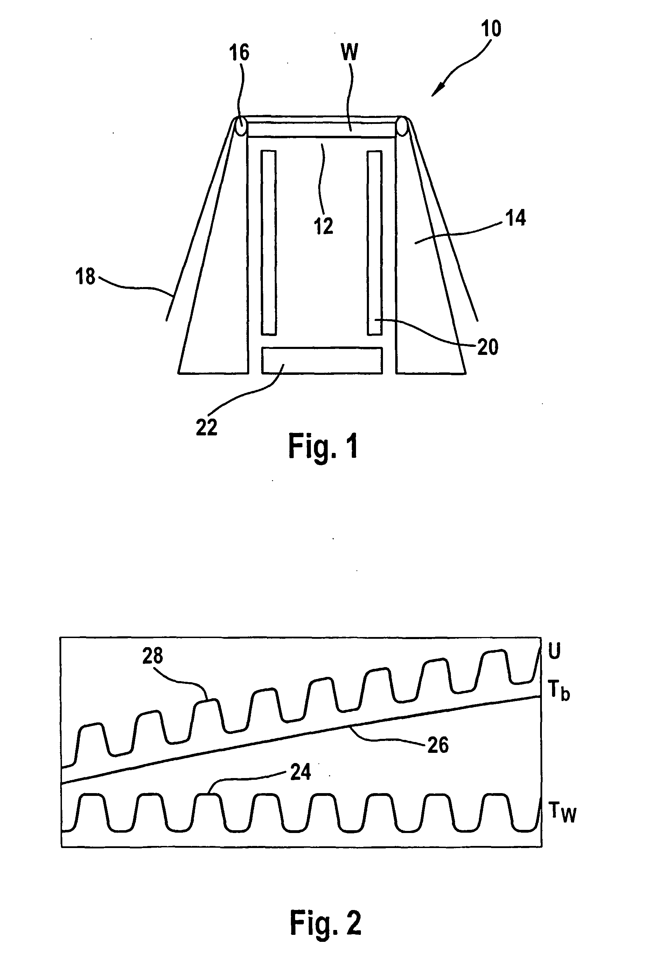

Die in Fig. 1 dargestellte Meßspitze 10 umfaßt ein sich zu einer Strahlungseintrittsöffnung 12 hin konisch verjüngendes Gehäuse 14, das zur Durchführung einer Temperaturmessung in den Gehörgang eines Benutzers einführbar ist. Die Strahlungseintrittsöffnung 12 ist als Schutz für das Gehäuseinnere gegen unerwünschte Verschmutzungen und vor eventuellen Beschädigungen durch ein Strahlungseintrittsfenster W abgeschlossen. Dieses besteht beispielsweise aus einer dünnen Siliziumscheibe mit integrierten elektrischen Heizbahnen und einem integrierten Temperatursensor, die mit einer (nicht dargestellten) Steuerungseinrichtung verbunden sind. Der Temperatursensor ist zudem mit einer (ebenfalls nicht dargestellten) Meßelektronik zur Erfassung und Auswertung seiner Temperatursignale elektrisch verbunden. Wenn die Heizbahnen und/oder der Temperatursensor nicht ins Strahlungseintrittsfenster W integriert sind, kann dieses beispielsweise aber auch von einem peripheren beheizbaren Ring 16 umgeben sein, der gleichzeitig auch als Temperatursensor dient.

Das Strahlungseintrittsfenster W ist mit einer als Wegwerfartikel konzipierten, austauschbaren Einweg-Schutzkappe 18 aus einer dünnen Polyethylenfolie abgedeckt, um eine eventuelle Verschmutzung oder Beschädigung des Strahlungseintrittsfensters W zu vermeiden und um insbesondere auch eine Übertragung von Krankheiten durch eine mangelnde oder unsachgemäße Reinigung zu verhindern. Die Einweg-Schutzkappe 18 ist hierbei so gestaltet und so dimensioniert, daß sie zur Temperaturmessung zusammen mit der Meßspitze 10 in den Gehörgang einer Person einführbar ist, ohne daß hierbei ein größerer unangenehmer Druck auf das Ohr ausgeübt wird.

Beim Aufheizen des Strahlungseintrittsfensters W emittiert dieses eine entsprechende zusätzliche Infrarot-Strahlung, die sich der auftreffenden Infrarot-Strahlung eines (nicht dargestellten) beliebigen Messobjekts überlagert. Durch das Strahlungseintrittsfenster W wird somit auch der im Strahlengang liegende Teil der Einweg-Schutzkappe 18 geheizt, so daß die Meßsignale auch durch die Transmission und Emissivität der Einweg-Schutzkappe 18 entsprechend beeinflusst werden. Damit wird also durch eine entsprechende Meßsignal- oder Sensorsignaländerung auch insbesondere eine eventuelle Verschmutzung der Einweg-Schutzkappe 18 durch Cerumen mit erfasst.

Um Signaländerungen durch eine eventuelle Veränderung eines erfassten Meßobjekts zu vermeiden, ist es vorteilhaft, die Meßspitze 10 beim Durchführen einer erfindungsgemäßen Funktionsüberprüfung abzudecken.

Hinter dem Strahlungseintrittsfenster W ist ein Wellenleiter 20 zur Weiterleitung einfallender Infrarot-Strahlung zu einem nachgeschalteten Infrarot-Sensor 22 angeordnet, der zur Erfassung der Infrarot-Strahlung und zur Erzeugung elektrischer Sensorsignale U in Abhängigkeit von der erfassten Strahlung dient. Andere Ausführungen weisen keinen Wellenleiter auf.

Der Infrarot-Sensor 22 ist ebenfalls mit der Meßelektronik des IR-Strahlungsthermometers verbunden, die so ausgebildet ist, daß sie anliegende elektrische Meßsignale U des InfrarotSensors 22 in entsprechende Temperatursignale oder Temperaturwerte umwandelt.

Die Meßelektronik ist ihrerseits mit einer (nicht dargestellten) Anzeigeeinrichtung zur geeigneten Darstellung gemessener Temperaturwerte, beispielsweise einem Display, verbunden.

Die Meßelektronik umfasst einen Datenspeicher für die erforderlichen sensorspezifischen Kalibrierungsdaten, wie die Empfindlichkeit S des Strahlungssensors, die Emissivität $\varepsilon$ und die Transmission t seines Strahlungseintrittsfensters W und Meßsignal-Differenzen $\Delta U$ als Funktion bestimmter vorgegebener Fenstertemperaturen $T_W$. Die Kalibrierungsdaten können jedoch - alternativ hierzu - auch Werte für die entsprechenden Plank'schen Strahlungsintegrale L $(T_W)$ umfassen.

Die Meßelektronik umfasst zudem eine erfindungsgemäße Analyseeinrichtung zur Bestimmung von Meßsignal-Differenzen $\Delta U$ aus anliegenden Meßsignalen U bzw. zur Bestimmung der Steigung der gemessenen Signalkurve und zur Auswertung dieser Meßsignal-Differenzen $\Delta U$ bzw. der Steigung anhand der gespeicherten Kalibrierungsdaten. Die Analyseeinrichtung dient auch zur Erzeugung eines Funktionsstörungssignals im Falle einer erkannten Funktionsstörung des Strahlungsmeßgeräts, das durch die Anzeigeeinrichtung in geeigneter Form, beispielsweise als klar erkennbares rotes Lichtsignal, darstellbar ist. Die Analyseeinrichtung dient gegebenenfalls auch zur Erzeugung eines Kompensations- oder Korrektursignals zur Kompensation der erfassten Funktionsstörung und zur entsprechenden Korrektur der Empfindlichkeit S des Strahlungssensors und der aufgenommenen Meßsignale oder Meßwerte.

Zur erfindungsgemäßen Funktionsüberprüfung des beschriebenen Infrarot-Strahlungsthermometers wird dessen Meßspitze 10 eingeschaltet und es wird die elektrische Heizung des Strahlungseintrittsfensters W aktiviert. Bei einer ersten Temperatur $T_{W1}$ des Strahlungseintrittsfensters W, die gegebenenfalls auch bereits gleich der Umgebungstemperatur $T_a$ sein kann, wird nun die Temperatur $T_b$ eines beliebigen Messobjekts gemessen. Kurze Zeit später wird dann bei einer zweiten höheren Temperatur $T_{W2}$ des Strahlungseintrittsfensters W die Temperatur des Messobjekts $T_b$ erneut gemessen. Die beiden Messungen erfolgen hierbei in einem so geringen zeitlich Abstand, daß während der beiden Messvorgänge mit hinreichender Genauigkeit von einer konstanten Objekttemperatur $T_b$ und einer konstanten Umgebungstemperatur $T_a$ ausgegangen werden kann.

Durch die beschriebene Analyseeinrichtung wird nun die Differenz der beiden gemessenen Objekttemperaturen $T_b$ - oder, alternativ hierzu, die Differenz der beiden entsprechenden Meßsignale - bestimmt und mit einem in der Messelektronik gespeicherten, bei der Kalibrierung bestimmten vorgegebenen Zulässigkeitswert oder auch einem Zulässigkeitsbereich mit bestimmten zulässigen Toleranz- oder Fehlergrenzen verglichen, bei dem eine ordnungsgemäße Funktionsweise der Meßspitze 10 gewährleistet ist.

Falls die gemessene Temperatur- oder Signaldifferenz betragsmäßig oberhalb des vorgegebenen Zulässigkeitswerts oder Zulässigkeitsbereichs liegt, wird von der Analyseeinrichtung ein entsprechendes Funktionsstörungssignal erzeugt, das dem Benutzer über die Anzeigeeinrichtung eine unzulässig starke Verschmutzung der Einweg-Schutzkappe 18 oder des Strahlungseintrittsfensters W signalisiert. Zusätzlich hierzu kann sicherheitshalber über eine entsprechende Anzeige mittels der Anzeigeeinrichtung auch noch die Durchführung einer Reinigung empfohlen werden.

Zur Behebung der erkannten Funktionsstörung wird dann von dem Benutzer die Einweg-Schutzkappe 18 überprüft und gegebenenfalls gründlich gereinigt oder - noch einfacher - einfach gegen eine saubere neue Einweg-Schutzkappe 18 ausgetauscht. Zudem wird sicherheitshalber auch noch das Strahlungseintrittsfenster W auf seine Sauberkeit hin überprüft und gegebenenfalls gründlich gereinigt.

Vor der Durchführung einer Temperaturmessung im Ohr eines Benutzers erfolgt dann anschließend sicherheitshalber auf die oben beschriebene Art und Weise noch einmal eine erneute Funktionsüberprüfung der Meßspitze 10, um eine zuverlässige Funktionsweise und genaue Messwerte zu gewährleisten.

Falls die gemessene Temperatur- oder Signaldifferenz betragsmäßig jedoch unterhalb des vorgegebenen Zulässigkeitswerts oder Zulässigkeitsbereichs liegt, wird von der Analyseeinrichtung ein entsprechendes Funktionsstörungssignal erzeugt, das dem Benutzer über die Anzeigeeinrichtung das Vorliegen eines möglichen Kalibrierungsfehlers signalisiert. Zusätzlich hierzu können dem Benutzer über die Anzeigeeinrichtung gegebenenfalls auch gleich noch die erforderlichen Maßnahmen oder entsprechende Hinweise zur Behebung der erkannten Funktionsstörung angezeigt werden.

Zur Behebung der vorliegenden Funktionsstörung wird von dem Benutzer zunächst die Einweg-Schutzkappe 18 auf ihre Sauberkeit hin überprüft und gegebenenfalls gereinigt oder einfach wieder gegen eine saubere neue Einweg-Schutzkappe 18 ausgetauscht. Zudem wird sicherheitshalber auch noch das Strahlungseintrittsfenster W auf seine Sauberkeit hin überprüft und gegebenenfalls gründlich gereinigt. Hierdurch werden eventuelle Verschmutzungseinflüsse auf die Sensorsignale zuverlässig ausgeschlossen, so daß für die weitere Vorgehensweise mit hinreichender Genauigkeit von unveränderten Werten für $\varepsilon$ und t entsprechend den gespeicherten ursprünglichen Kalibrierungsdaten ausgegangen werden kann.

Anschließend erfolgt dann auf die oben beschriebene Art und Weise eine erneute Überprüfung der Funktionsweise des Infrarot-Strahlungsthermometers mit einer neuerlichen Bestimmung der Temperatur- oder Signaldifferenz bei zwei aufeinanderfolgenden Messungen der Objekttemperatur $T_b$. und einem Vergleich dieser Differenz mit dem vorgegebenen Zulässigkeitswert oder Zulässigkeitsbereich. Durch die zuvorigen Reinigungsmaßnahen muß eine nunmehr festgestellte Abweichung von dem vorgegebenen Zulässigkeitswert oder Zulässigkeitsbereich ausschließlich auf eine Veränderung der Empfindlichkeit S des Strahlungssensors zurückzuführen sein.

Anhand der gemessenen Abweichung lässt nun sich die Empfindlichkeit S automatisch korrigieren. Die Abweichung kann auch zur Erzeugung eines entsprechenden Korrektur- oder Funktionsstörungs-Kompensations-Signals für die nachfolgende Durchführung einer Temperaturmessung genutzt werden. Das Infrarot-Strahlungsthermometer kann sich damit vor jeder Messung automatisch selbst kalibrieren, um so beispielsweise den Einfluß einer Verschmutzung, eines Alterungsprozesses oder eines Defektes eines Sensorelementes im Strahlengang auf die Messergebnisse automatisch zu eliminieren.

Gegebenenfalls wird dem Benutzer auch zur Durchführung einer Neu- oder Nachkalibrierung des Infrarot-Strahlungsthermometers geraten.

Anstatt einer einmaligen Funktionsüberprüfung des Infrarot-Strahlungsthermometers kann auch eine kontinuierliche oder quasikontinuierliche Überwachung seiner Funktionsweise erfolgen. In diesem Fall ist es vorteilhaft, wenn das Strahlungseintrittsfenster- oder gegebenenfalls auch ein sonstiges geheiztes optisches Element im Strahlengang - eine möglichst kleine thermische Zeitkonstante aufweist, so wie dies bei der vorliegenden dünnen Silizium-Fensterscheibe W der Fall ist.

Das Sensorsignal U wird hierbei beim Aufheizen des Strahlungseintrittsfensters W kontinuierlich oder quasikontinuierlich gemessen und es wird die Steigung der sich ergebenden Anstiegskurve des Sensorsignals U als Funktion der Fenstertemperatur $T_W$ bestimmt Die Steigung kann hierbei - entsprechend den obigen Ausführungen - beispielsweise einfach anhand der Differenz zweier Meßsignale bestimmt werden; bei höheren Genauigkeitsanforderungen können jedoch gegebenenfalls auch entsprechend genauere numerische Verfahren genutzt werden, bei denen eine größere Anzahl an Messwerten ausgewertet wird. Die ermittelte Steigung wird dann - entsprechend den obigen Ausführungen - mit dem bei der Kalibrierung bestimmten ursprünglichen Steigungswert verglichen.

Bei einer solchen kontinuierlichen oder quasikontinuierlichen Funktionsüberprüfung des Infrarot-Strahlungsthermometers kann die Temperatur $T_W$ des Strahlungseintrittsfensters W auch innerhalb bestimmter Temperaturgrenzen zeitlich periodisch variiert werden. Eine entsprechende beispielhafte zeitliche periodische Veränderung der Fenstertemperatur $T_W$ ist in der untersten Kurve 24 in Fig. 2 dargestellt. Die mittlere Kurve 26 zeigt den beispielhaften zeitlichen Verlauf der Temperatur $T_b$ eines bestimmten Messobjekts, während in der obersten Kurve 28 das sich gleichfalls entsprechend periodisch verändernde, resultierende gemessene Sensorsignal U dargestellt ist, aus dem sich auf die oben beschriebene Art und Weise die gewünschten Informationen über die ordnungsgemäße Funktionsweise des Infrarot-Strahlungsthermometers ermitteln lassen und sich die Funktionsfähigkeit kontinuierlich überprüfen lässt. Durch ein geeignetes Verfahren, z.B. ein Lock-In-Verfahren, lässt sich aus dem gemessen Sensorsignal U beispielsweise auch die Temperatur $T_b$ des Messobjektes ermitteln, wie z.B. die Ohr-Innentemperatur eines Thermometer-Benutzers, Diese kontinuierliche oder quasikontinuierliche Funktionsüberprüfung kann auch während eines bestimmungsgemäßen Messvorgangs zur Bestimmung der Ohr-Innentemperatur erfolgen.

Die vorliegende Erfindung wurde vorstehend anhand eines Infrarot-Strahlungsthermometers beispielhaft dargestellt. Es sei jedoch darauf hingewiesen, daß das beschriebene erfindungsgemäße Verfahren entsprechend auch zur Funktionsüberprüfung anderer erfindungsgemäß gestalteter Strahlungsmeßgeräten, wie z.B. IR-Kameras, einsetzbar ist.

**Patentansprüche**

1. Verfahren zur Überprüfung der ordnungsgemäßen Funktionsweise eines Strahlungsmessgeräts, beispielsweise eines Strahlungsthermometers, mit einem beheizbaren oder kühlbaren Strahlungseintrittsfenster (W) durch:

   - Aufnehmen eines die Temperatur ($T_b$) eines Messobjektes repräsentierenden Messsignals (U) bei zumindest zwei unterschiedlichen Temperaturen ($T_{W1}$) und ($T_{w2}$) des Strahlungseintrittsfensters (W);
   - Bestimmung der Messsignal-Änderung ($\Delta U$) in Abhängigkeit von den zumindest zwei unterschiedlichen Temperaturen ($T_{w1}$) und ($T_{w2}$); und
   - Signalisierung einer Funktionsstörung, falls diese Messsignal-Änderung ($\Delta U$) von einem vorgegebenen Zulässigkeitswert abweicht oder außerhalb eines vorgegebenen Zulässigkeitsbereichs liegt.

2. Verfahren nach Anspruch 1,
   **dadurch gekennzeichnet,**

**dass** aus der Messsignal-Änderung ($\Delta U$) die Art der vorliegenden Funktionsstörung automatisch bestimmt und angezeigt wird.

3.  Verfahren nach Anspruch 1 oder 2,
    **dadurch gekennzeichnet,**
    **dass** die Funktionsstörung automatisch behoben oder ein Hinweis zu ihrer Behebung angezeigt wird.

4.  Verfahren nach einem der vorhergehenden Ansprüche,
    **dadurch gekennzeichnet,**
    **dass** die Funktionsstörung durch automatische Neukalibrierung des Strahlungsmessgeräts behoben wird.

5.  Verfahren nach einem der vorhergehenden Ansprüche,
    **dadurch gekennzeichnet,**
    **dass** die Temperatur ($T_w$) des Strahlungseintrittsfensters (W) zeitlich periodisch variiert wird.

6.  Verfahren nach einem der vorhergehenden Ansprüche,
    **gekennzeichnet durch**
    die zusätzlichen Verfahrensschritte:

    - Reinigen des Strahlungseintrittsfensters. (W); und
    - erneute Überprüfung der Funktionsweise des Strahlungsmessgeräts gemäß Anspruch 1, falls die Messsignal-Änderung ($\Delta U$) betragsmäßig oberhalb des Zulässigkeitswerts oder Zulässigkeitsbereichs liegt.

7.  Verfahren nach einem der Ansprüche 1 - 5,
    **gekennzeichnet durch**
    die zusätzlichen Verfahrensschritte:

    - Reinigen des Strahlungseintrittsfensters (W);
    - erneute Überprüfung der Funktionsweise des Strahlungsmessgeräts gemäß Anspruch 1; und
    - automatische Erzeugung eines Korrektur- oder Kompensationssignals, falls die Messsignal-Änderung ($\Delta U$) betragsmäßig unterhalb des Zulässigkeitswerts oder Zulässigkeitsbereichs liegt.

8.  Strahlungsmessgerät, beispielsweise Strahlungsthermometer, mit:

    - einem Strahlungseintrittsfenster (W);
    - einer Heiz- oder Kühleinrichtung für das Strahlungseintrittsfenster (W);
    - zumindest einem temperatursensitiven Sensorelement (22) zur Umwandlung elektromagnetischer Strahlung in elektrische Messsignale (U);
    - einer Messelektronik zur Erfassung und Auswertung der Messsignale (U) und zur Speicherung von Kalibrierungsdaten; und
    - einer Anzeigeeinrichtung;

    **dadurch gekennzeichnet,**
    **dass** die Messelektronik eine Analyseeinrichtung zur Analyse von Messsignal-Änderungen ($\Delta U$) umfasst wobei die Messsignal-Änderung ($\Delta U$) abhängig von zwei unterschiedlichen Temperaturen ($T_{w1}$) und ($T_{w2}$) des Strahlungseintrittsfensters (W) ist und die Analyseeinrichtung die Erzeugung eines Funktionsstörungssignals umfasst.

9.  Strahlungsmessgerät nach Anspruch 8,
    **dadurch gekennzeichnet,**
    **dass** das Funktionsstörungssignal ein Kompensations- oder Korrektursignal umfasst.

10. Strahlungsmessgerät nach Anspruch 8 oder 9,
    **dadurch gekennzeichnet,**
    **dass** die Heiz- oder Kühleinrichtung zeitlich periodisch aktivierbar ist oder aktiviert wird.

11. Strahlungsmessgerät nach einem der Ansprüche 8 - 10,
    **dadurch gekennzeichnet,**
    **dass** die Heiz- oder Kühleinrichtung in das Strahlungseintrittsfenster (W) integriert ist.

**12.** Strahlungsmessgerät nach einem der Ansprüche 8 - 11,
**dadurch gekennzeichnet,**
**dass** das Strahlungseintrittsfenster (W) einen Temperaturfühler umfasst.

**13.** Strahlungsmessgerät nach einem der Ansprüche 8 - 12,
**dadurch gekennzeichnet,**
**dass** das Strahlungseintrittsfenster (W) aus Silizium besteht.

**Claims**

**1.** A method for checking on proper functioning of a radiation meter, for example, a radiation thermometer, having a heatable or coolable radiation admittance window (W) by:

   - recording a measuring signal (U) representing the temperature ($T_b$) of a measurement object at a minimum of two different temperatures ($T_{W1}$) and ($T_{W2}$) of the radiation admittance window (W);
   - determining the change in the measuring signal ($\Delta U$) as a function of the at least two different temperatures ($T_{W1}$) and ($T_{W2}$); and
   - signaling a malfunction if this change in measuring signal ($\Delta U$) deviates from a predefined admissibility value or is outside a predefined admissibility range.

**2.** The method according to Claim 1,
**characterized in that**
the type of malfunction is automatically determined from the change in the measuring signal ($\Delta U$) and displayed.

**3.** The method according to Claim 1 or 2,
**characterized in that**
the malfunction is automatically corrected or instructions for correcting it are displayed.

**4.** The method according to any one of the preceding claims,
**characterized in that**
the malfunction is corrected by automatic recalibration of the radiation meter.

**5.** The method according to any one of the preceding claims,
**characterized in that**
the temperature ($T_W$) of the radiation admittance (W) is varied periodically over time.

**6.** The method according to any one of the preceding claims,
**characterized by**
the additional method steps:

   - cleaning the radiation admittance window (W); and
   - renewed testing of the functioning of the radiation meter according to Claim 1 if the change in the measuring signal ($\Delta U$) is above the admissibility value or admissibility range in terms of amount.

**7.** The method according to any one of Claims 1-5,
**characterized by**
the additional method steps:

   - cleaning the radiation admittance window (W);
   - renewed testing of the functioning of the radiation meter according to Claim 1; and
   - automatically generating a correction signal or compensation signal if the change in measuring signal ($\Delta U$) is below the admissibility value or the admissibility range in terms of amount.

**8.** A radiation meter, for example, a radiation thermometer, comprising:

   - a radiation admittance window (W);
   - a heating or cooling device for the radiation admittance window (W);

- at least one temperature-sensitive sensor element (22) for converting electromagnetic radiation into electric measuring signals (U);
- an electronic measurement unit for detecting and analyzing the measuring signals (U) and for storing calibration data; and

a display device,
**characterized in that**
the electronic measurement unit comprises an analyzer unit for analyzing changes in measuring signals ($\Delta U$), whereby the change in measuring signal ($\Delta U$) is a function of two different temperatures ($T_{W1}$) and ($T_{W2}$) of the radiation admittance window (W) and the analyzer device comprises generation of a malfunction signal.

9. The radiation meter according to Claim 8,
**characterized in that**
the malfunction signal comprises a compensation signal or a correction signal.

10. The radiation meter according to Claim 8 or 9,
**characterized in that**
the heating or cooling device is activatable or is activated periodically over time.

11. The radiation meter according to any one of Claims 8-10,
**characterized in that**
the heating or cooling device is integrated into the radiation admittance window (W).

12. The radiation meter according to any one of Claims 8-11,
**characterized in that**
the radiation admittance window (W) comprises a temperature sensor.

13. The radiation meter according to any one of Claims 8-12,
**characterized in that**
the radiation admittance window (W) is made of silicon.

**Revendications**

1. Procédé de contrôle du bon fonctionnement d'un appareil de mesure de rayonnement, par exemple d'un thermomètre à radiation, comprenant une fenêtre d'entrée du rayonnement (W) pouvant être chauffée ou refroidie, par :

- Enregistrement d'un signal de mesure (U) représentant la température ($T_b$) d'un objet mesuré à au moins deux températures différentes ($T_{W1}$) et ($T_{W2}$) de la fenêtre d'entrée du rayonnement (W) ;
- Détermination de la modification du signal de mesure ($\Delta U$) en fonction au moins des deux températures différentes ($T_{W1}$) et ($T_{W2}$) ; et
- Signalement d'un défaut de fonctionnement si cette modification du signal de mesure ($\Delta U$) s'écarte d'une valeur de tolérance prédéfinie ou si elle se trouve en dehors d'une plage de tolérances prédéfinie.

2. Procédé selon la revendication 1, **caractérisé en ce que** la nature du défaut de fonctionnement en présence est déterminée automatiquement à partir de la modification du signal de mesure ($\Delta U$) puis indiquée.

3. Procédé selon la revendication 1 ou 2, **caractérisé en ce que** le défaut de fonctionnement est supprimé automatiquement ou qu'une consigne permettant de supprimer celui-ci est affichée.

4. Procédé selon l'une des revendications précédentes, **caractérisé en ce que** le défaut de fonctionnement est supprimé par un recalibrage automatique de l'appareil de mesure de rayonnement.

5. Procédé selon l'une des revendications précédentes, **caractérisé en ce que** la température ($T_W$) de la fenêtre d'entrée du rayonnement (W) est modifiée périodiquement dans le temps.

6. Procédé selon l'une des revendications précédentes, **caractérisé par** les étapes supplémentaires suivantes :

- Nettoyage de la fenêtre d'entrée du rayonnement (W) ; et

- Nouveau contrôle du fonctionnement de l'appareil de mesure de rayonnement conformément à la revendication 1 si la valeur de la modification du signal de mesure ($\Delta U$) est supérieure à la valeur de tolérance ou hors de la plage de tolérances.

7. Procédé selon l'une des revendications 1 à 5, **caractérisé par** les étapes supplémentaires suivantes :

- Nettoyage de la fenêtre d'entrée du rayonnement (W) ;

- Nouveau contrôle du fonctionnement de l'appareil de mesure de rayonnement conformément à la revendication 1 ; et

- Génération automatique d'un signal de compensation ou de correction si la valeur de la modification du signal de mesure ($\Delta U$) est inférieure à la valeur de tolérance ou dans la plage de tolérances.

8. Appareil de mesure de rayonnement, par exemple thermomètre à radiation, comprenant :

- une fenêtre d'entrée du rayonnement (W) ;

- un dispositif de chauffage ou de refroidissement pour la fenêtre d'entrée du rayonnement (W) ;

- au moins un élément de détection (22) sensible à la température pour convertir le rayonnement électromagnétique en signaux de mesure électriques (U) ;

- une électronique de mesure destinée à acquérir et à interpréter les signaux de mesure (U) et à enregistrer les données de calibrage ; et

- un dispositif d'affichage ;

**caractérisé en ce que** l'électronique de mesure comprend un dispositif d'analyse pour analyser les modifications du signal de mesure ($\Delta U$), la modification du signal de mesure ($\Delta U$) dépendant de deux températures différentes ($T_{W1}$) et ($T_{W2}$) de la fenêtre d'entrée du rayonnement (W) et le dispositif d'analyse comprenant la génération d'un signal de défaut de fonctionnement.

9. Appareil de mesure de rayonnement selon la revendication 8,
**caractérisé en ce que** le signal de défaut de fonctionnement comprend un signal de compensation ou de correction.

10. Appareil de mesure de rayonnement selon la revendication 8 ou 9, **caractérisé en ce que** le dispositif de chauffage ou de refroidissement peut être ou est activé périodiquement dans le temps.

11. Appareil de mesure de rayonnement selon l'une des revendications 8 à 10, **caractérisé en ce que** le dispositif de chauffage ou de refroidissement est intégré dans la fenêtre d'entrée du rayonnement (W).

12. Appareil de mesure de rayonnement selon l'une des revendications 8 à 11, **caractérisé en ce que** la fenêtre d'entrée du rayonnement (W) comprend une sonde de température.

13. Appareil de mesure de rayonnement selon l'une des revendications 8 à 12, **caractérisé en ce que** la fenêtre d'entrée du rayonnement (W) est en silicium.

16    W                    10

18                         14

12

20

22

Fig. 1

28                     U
                       Tb
             26
   24
                       Tw

Fig. 2

**EP 1 789 764 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0054012 A